# EUROPEAN PATENT APPLICATION

(11) **EP 4 447 369 A1**
(43) Date of publication of application: **16.10.2024**
(21) Application number: 24165735.2
(22) Date of filing: 25.03.2024
(51) Int. Cl.: H04L 5/00, H04J 13/00, H04B 7/0413

(54) **METHODS FOR INCREASING DMRS CHANNEL ESTIMATION RELIABILITY FOR HIGHER RANKS**

(30) Priority: 07.04.2023 US 202363457868 P
(71) Applicant: Nokia Technologies Oy, 02610 Espoo (FI)
(72) Inventor: YUK, Youngsoo, Seoul (KR); LUOTO, Petri, Oulu (FI); KARJALAINEN, Juha Pekka, Sotkamo (FI)
(74) Representative: Nokia EPO representatives

(57) **Abstract**

A mapping is selected, for DMRSs for one or more transmissions on a channel, using information for ranks higher than four that has ports assigned for the DRMSs mapped to different codewords and to different CDM groups. Layers are distributed over the CDM groups. The DMRSs are transmitted on the channel.

## Description

### RELATED APPLICATION

This application claims priority to US provisional Application No. 63/457868 filed April 7, 2023, which is incorporated herein by reference in its entirety.

### TECHNICAL FIELD

Examples of embodiments herein relate generally to wireless communications and, more specifically, relate to sending measurement symbols for demodulation reference signals.

### BACKGROUND

Wireless communication systems typically use reference signals for various purposes. One such reference signal is a demodulation reference signal (DMRS). This provides the system with reference signals that can be used for various purposes such as modification of modulation and coding. DMRS can occupy various locations across a time-frequency space and can be subject to interference via transmission or degradation in certain frequencies and time. This may also vary with rank of the transmission that is being used.

### BRIEF SUMMARY

This section is intended to include examples and is not intended to be limiting.

In an exemplary embodiment, a method is disclosed that includes selecting a mapping, for demodulation reference signals for one or more transmissions on a channel, using information for ranks higher than four that has ports assigned for the demodulation reference signals mapped to different codewords and to different code division multiplexing groups. The method also includes distributing layers over the code division multiplexing groups, and transmitting the demodulation reference signals on the channel.

An additional exemplary embodiment includes a computer program, comprising instructions for performing the method of the previous paragraph, when the computer program is run on an apparatus. The computer program according to this paragraph, wherein the computer program is a computer program product comprising a computer-readable medium bearing the instructions embodied therein for use with the apparatus. Another example is the computer program according to this paragraph, wherein the program is directly loadable into an internal memory of the apparatus.

An exemplary apparatus includes one or more processors and one or more memories storing instructions that, when executed by the one or more processors, cause the apparatus at least to perform: selecting a mapping, for demodulation reference signals for one or more transmissions on a channel, using information for ranks higher than four that has ports assigned for the demodulation reference signals mapped to different codewords and to different code division multiplexing groups; distributing layers over the code division multiplexing groups; and transmitting the demodulation reference signals on the channel.

An exemplary computer program product includes a computer-readable storage medium bearing instructions that, when executed by an apparatus, cause the apparatus to perform at least the following: selecting a mapping, for demodulation reference signals for one or more transmissions on a channel, using information for ranks higher than four that has ports assigned for the demodulation reference signals mapped to different codewords and to different code division multiplexing groups; distributing layers over the code division multiplexing groups; and transmitting the demodulation reference signals on the channel.

In another exemplary embodiment, an apparatus comprises means for performing: selecting a mapping, for demodulation reference signals for one or more transmissions on a channel, using information for ranks higher than four that has ports assigned for the demodulation reference signals mapped to different codewords and to different code division multiplexing groups; distributing layers over the code division multiplexing groups; and transmitting the demodulation reference signals on the channel.

### BRIEF DESCRIPTION OF THE DRAWINGS

In the attached drawings:
FIG 1A is a block diagram of one possible and non-limiting exemplary system in which the exemplary embodiments may be practiced;
FIG. 1B is an example of a block diagram of an apparatus suitable for implementing any of the nodes in FIG. 1A;
FIG. 2A is a table from 3GPP TS 38.212, Table 7.3.1.2.2-2: Antenna port(s) (1000 + DMRS port), *dmrs-Type*=1, *maxLength*=2;
FIG. 2B is a table from 3GPP TS 38.212, Table 7.3.1.2.2-4: Antenna port(s) (1000 + DMRS port), *dmrs-Type*=2, *maxLength*=2;
FIG. 3 is a table (Table 3) illustrating port to indexing mapping for Rel. 18 eType 1 DMRS ports for PDSCH, in accordance with an exemplary embodiment;
FIG. 4 is a table (Table 4) illustrating DMRS ports to CW mapping for Rel. 18 eType 1 DMRS, in accordance with an exemplary embodiment;
FIG. 5 is a table (Table 5) illustrating new port to indexing mapping for Rel. 18 eType 2 DMRS ports for PDSCH;
FIG. 6 is a table (Table 6) illustrating DMRS ports to CW mapping for Rel. 18 eType 2 DMRS;
FIG. 7 is a flowchart of a method for increasing DMRS channel estimation reliability for higher ranks;
FIGS. 8A and 8B illustrate examples of a proposed cyclic mapping, for eType 1 DMRS in FIG. 8A and for eType2 DMRS in FIG. 8B;
FIG. 8C is a flowchart illustrating one example of applying the cyclic mapping of FIG. 8A; and
FIG. 8D is a flowchart illustrating one example of applying the cyclic mapping of FIG. 8B.

### DETAILED DESCRIPTION OF THE DRAWINGS

Abbreviations that may be found in the specification and/or the drawing figures are defined below, at the end of the detailed description section.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

When more than one drawing reference numeral, word, or acronym is used within this description with "/", and in general as used within this description, the "/" may be interpreted as "or", "and", or "both".

As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

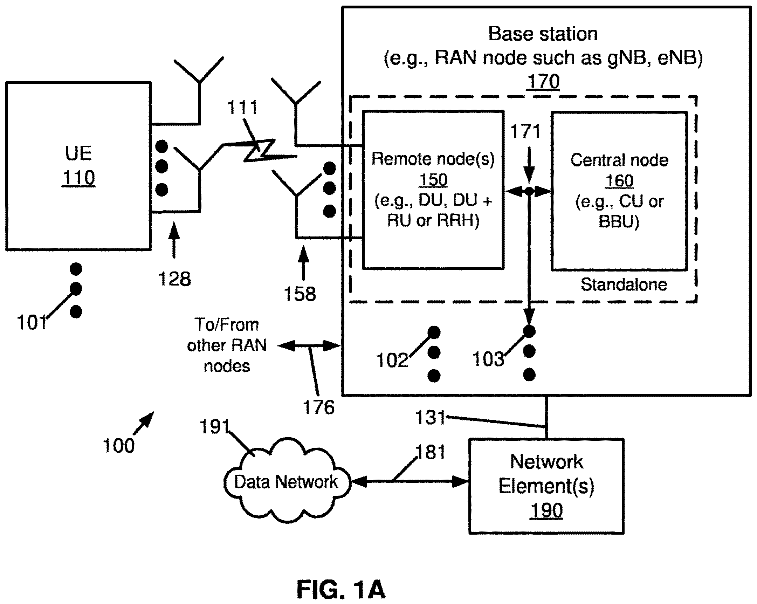

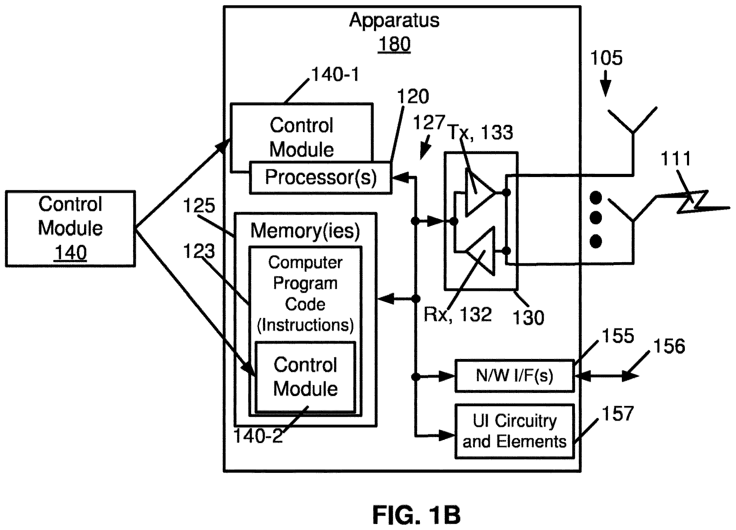

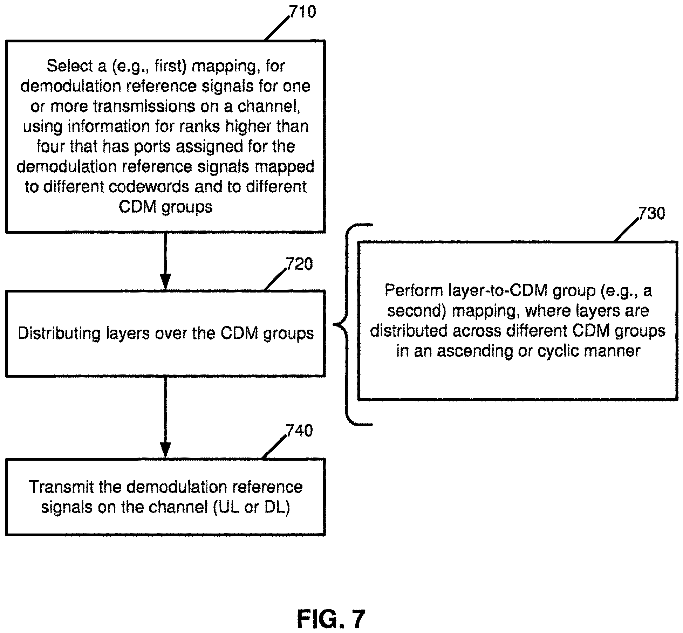

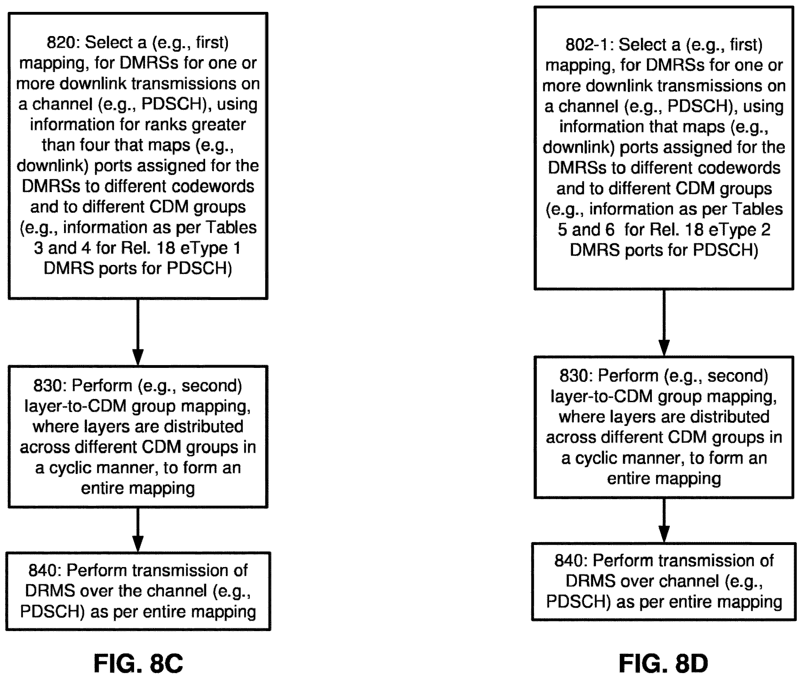

Any flow diagram (such as FIG. 7 and in FIGS. 8C and 8D) or signaling diagram herein is considered to be a logic flow diagram, and illustrates the operation of an exemplary method, results of execution of computer program instructions embodied on a computer readable memory, functions performed by logic implemented in hardware, and/or interconnected means for performing functions in accordance with an exemplary embodiment. Block diagrams (such as FIGS. 1A and 1B) also illustrate the operation of an exemplary method, results of execution of computer program instructions embodied on a computer readable memory, functions performed by logic implemented in hardware, and/or interconnected means for performing functions in accordance with an exemplary embodiment.

The exemplary embodiments herein describe techniques for methods for increasing DMRS channel estimation reliability for higher ranks. Additional description of these techniques is presented after a system into which the exemplary embodiments may be used is described.

Turning to FIG. 1A, this figure shows a block diagram of one possible and non-limiting exemplary system in which the exemplary embodiments may be practiced. A number of nodes are shown: a user equipment (UE) 110; a base station 170; and network element(s) 190.

In FIG. 1A, a user equipment (UE) 110, as one of the nodes, is in wireless communication via wireless link 111 with a wireless network 100. A UE 110 is a wireless, typically mobile device that can access a wireless network. The UE 110 is illustrated with one or more antennas 128. The ellipses 101 indicate there could be multiple UEs 110.

The base station 170, as another of the nodes but one that is part of the wireless network 100, provides access by wireless devices such as the UE 110 to the wireless network 100. The base station 170 is illustrated as having one or more antennas 158. There are many options for the base station 170. In general, the base station 170 is a RAN node, and in particular could be a gNB, which is the primary term used herein. That is, the base station 170 will be referred to as gNB 170. There are, however, many options including an eNB for the base station, or options other than cellular systems.

There are a number of configurations for the base station 170. One such is a "standalone" configuration, which includes all circuity as part of a single unit, and accesses the antennas 158. More commonly today, circuitry is split into one or more remote nodes 150 (accessing antennas 158) and central nodes 160. For instance, for 5G (also referred to as NR), a gNB might include a distributed unit (DU), or DU and radio unit (RU) as the remote nodes(s), and a central unit (CU) as the central node 160. For LTE, the base station 170 might include an eNB having a remote radio head as remote node 150 and a base band unit (BBU) as a central node 160. The remote node(s) 150 are coupled to a central node 160 via one or more links 171. There could be multiple remote nodes 150 for a single central node 160, and this is indicated by ellipses 102, indicating multiple remote nodes, and ellipses 103, indicating additional links 171. The remote nodes 150 are remote in the sense they are contained in different physical enclosures from a physical enclosure containing a corresponding central node 160. The link(s) 171 may be implemented using fiber optics, wireless techniques, or any other technique for data communications.

Two or more base stations 170 communicate using, e.g., link(s) 176. The link(s) 176 may be wired or wireless or both and may implement, e.g., an Xn interface for 5G, an X2 interface for LTE, or other suitable interface for other standards.

The wireless network 100 may include a network element or elements 190, as a third illustrated node, that may include core network functionality, and which provide connectivity via a link or links 181 with a data network 191, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity) functionality and/or SGW (Serving Gateway) functionality. These are merely exemplary functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards.

In general, the various embodiments of the user equipment 110 can include, but are not limited to, cellular telephones (such as smart phones, mobile phones, cellular phones, voice over Internet Protocol (IP) (VoIP) phones, and/or wireless local loop phones), tablets, portable computers, vehicles or vehicle-mounted devices for, e.g., wireless V2X (vehicle-to-everything) communication, image capture devices such as digital cameras, gaming devices, music storage and playback appliances, Internet appliances (including Internet of Things, IoT, devices), IoT devices with sensors and/or actuators for, e.g., automation applications, as well as portable units or terminals that incorporate combinations of such functions, laptop-embedded equipment (LEE), laptop-mounted equipment (LME), Universal Serial Bus (USB) dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. That is, the UE 110 could be any end device that may be capable of wireless communication. By way of example rather than limitation, the UE may also be referred to as a communication device, terminal device (MT), a Subscriber Station (SS), a Portable Subscriber Station, a Mobile Station (MS), or an Access Terminal (AT).

Turning to FIG. 1B, this figure is an example of a block diagram of an apparatus 180 suitable for implementing any of the nodes in FIG.1A. The apparatus 180 includes circuitry comprising one or more processors 120, one or more memories 125, one or more transceivers 130, one or more network (N/W) interface(s) (I/F(s)) 155 and user interface (UI) circuitry and elements 157, interconnected through one or more buses 127. Since this is an example covering all of the nodes in FIG. 1A, some of the nodes may not have all of the circuitry. For example, a base station 170 might not have UI circuitry and elements 157. All of the nodes may have additional circuitry, not described here. FIG. 1B is presented merely as an example.

Each of the one or more transceivers 130 includes a receiver, Rx, 132 and a transmitter, Tx, 133. The one or more buses 127 may be address, data, and/or control buses, and may include any interconnection mechanism, such as a series of lines on a motherboard or integrated circuit, fiber optics or other optical communication equipment, and the like. The one or more transceivers 130 are connected to one or more antennas 105, which could be one of the antennas 128 (from UE 110) or antennas 158 (from base station 170), and may communicate using wireless link 111.

The one or more memories 125 include computer program code 123. The apparatus 180 includes a control module 140, comprising one of or both parts 140-1 and/or 140-2, which may be implemented in a number of ways. The control module 140 may be implemented in hardware as control module 140-1, such as being implemented as part of the one or more processors 120. The control module 140-1 may be implemented also as an integrated circuit or through other hardware such as a programmable gate array. In another example, the control module 140 may be implemented as control module 140-2, which is implemented as computer program code (having corresponding instructions) 123 and is executed by the one or more processors 120. For instance, the one or more memories 125 store instructions that, when executed by the one or more processors 120, cause the apparatus 180 to perform one or more of the operations as described herein. Furthermore, the one or more processors 120, one or more memories 125, and example algorithms (e.g., as flowcharts and/or signaling diagrams), encoded as instructions, programs, or code, are means for causing performance of the operations described herein.

The network interface(s) (N/W I/F(s)) 155 are wired interfaces communicating using link(s) 156, which could be fiber optic or other wired interfaces. The link(s) 156 could be the link(s) 131 and/or 176 from FIG.1A. The link(s) 131 and/or 176 from FIG.1A could also be implements using transceiver(s) 130 and corresponding wireless link(s) 111. The apparatus could include only wireless transceiver(s) 130, only N/W I/Fs 155, or both wireless transceiver(s) 130 and N/W I/Fs 155.

The apparatus 180 may or may not include UI circuitry and elements 157. These could include a display such as a touchscreen, speakers, or interface elements such as for headsets. For instance, a UE 110 of a smartphone would typically include at least a touchscreen and speakers. The UI circuitry and elements 157 may also include circuity to communicate with external UI elements (not shown) such as displays, keyboards, mice, headsets, and the like.

The computer readable memories 125 may be of any type suitable to the local technical environment and may be implemented using any suitable data storage technology, such as semiconductor-based memory devices, flash memory, firmware, magnetic memory devices and systems, optical memory devices and systems, fixed memory and removable memory. The computer readable memories 125 may be means for performing storage functions. The processors 120 may be of any type suitable to the local technical environment, and may include one or more of general-purpose computers, special purpose computers, microprocessors, digital signal processors (DSPs) and processors based on a multi-core processor architecture, as non-limiting examples. The processors 120 may be means for performing functions, such as controlling the apparatus 180, and other functions as described herein.

Having thus introduced one suitable but non-limiting technical context for the practice of the exemplary embodiments, the exemplary embodiments will now be described with greater specificity.

Before describing the exemplary embodiments, an overview of the technical area is presented. In particular, the examples herein are related to 3GPP New Radio (NR) physical layer design for multiple input multiple output (MIMO) enhancements in Rel-18 and beyond. More specifically, the examples herein target to enhance reliability of demodulation reference signals (DMRSs) based channel estimates with higher ranks.

Rel-15 introduced Type 1 and Type two DMRS. Type 1 can cover 8 ports and Type 2 12 ports. Type 1 has two CDM groups and Type 2 has three CDM groups. The term eType is also used, which refers to enhanced Type. The number of ports is extended in Rel-18 to be up to 24 when eType-2 configuration is used.

In Rel-18, one of the objectives of Rel-18 NR MIMO Evo DL UL, is to discuss and define how to provide specification support for higher number of orthogonal DMRS ports as follows:

Study, and if justified, specify a larger number of orthogonal DMRS ports for downlink and uplink MU-MIMO (without increasing the DM-RS overhead), only for CP-OFDM, while:
1) Striving for a common design between DL and UL DMRS; and
2) Allowing up to 24 orthogonal DM-RS ports, where for each applicable DMRS type, the maximum number of orthogonal ports is doubled for both single- and double-symbol DMRS.

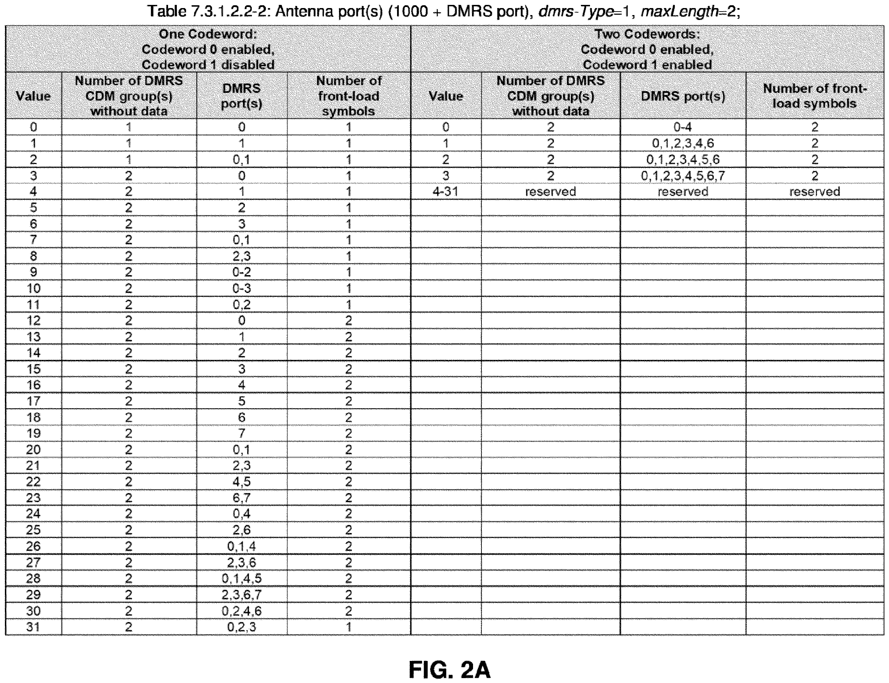

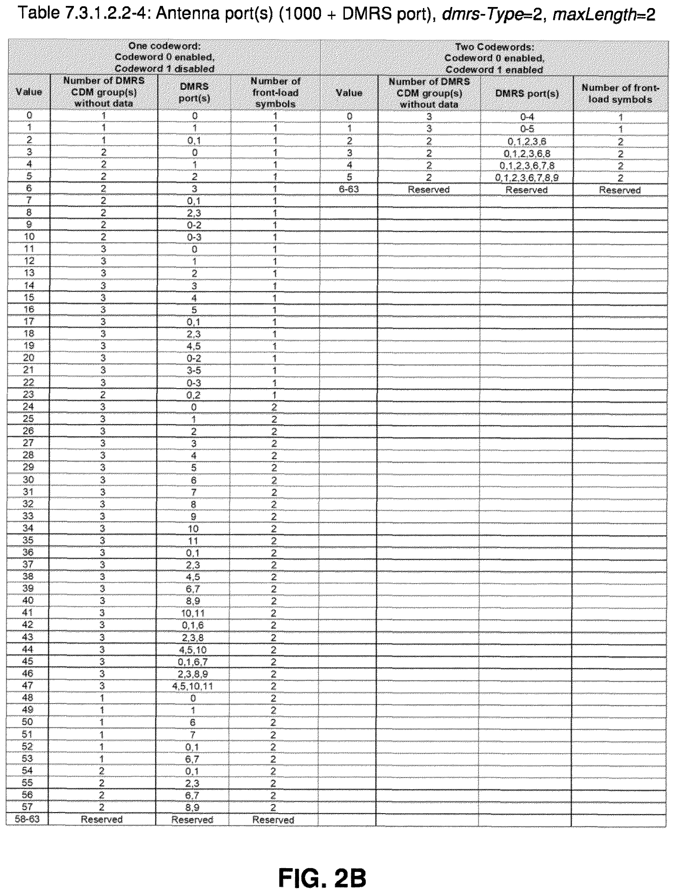

In 3GPP TS 38.212, for DL PDSCH, 8 antenna port DMRS is supported with port mapping, as shown in the tables in FIGS. 2A and 2B for both DMRS type 1 (Table 7.3.1.2.2-2) and DMRS type 2 (Table 7.3.1.2.2-4). In DL, the transmission rank is dynamically signaled with DCI (e.g., format 1_1) via the table where large number of entries associated with different antenna port combinations are required. FIG. 2A is a table from 3GPP TS 38.212, Table 7.3.1.2.2-2: Antenna port(s) (1000 + DMRS port), *dmrs-Type=1, maxLength=2,* and FIG. 2B is a table from 3GPP TS 38.212, Table 7.3.1.2.2-4: Antenna port(s) (1000 + DMRS port), *dmrs-Type*=2, *mcxxLength*=2.

According to 3GPP RAN WG1 meeting #112 agreement, for Rel. 18 eType 1/eType 2 DMRS ports of PDSCH/PUSCH with FD-OCC length 4, association between DMRS port indexes, CDM group index, FD-OCC index, and TD-OCC index (across consecutive DMRS symbols, if any) are determined by the following Table 1 and Table 2.

1) The p in Table 1 and Table 2 corresponds to DMRS port index for PDSCH.

2) DMRS port index for PDSCH is determined by p +1000 in Table 1 and Table 2. Here is Table 1:

**Table 1. Rel. 18 eType 1 DMRS ports for PDSCH**

| P | CDM group index | FD-OCC index | TD-OCC index |
|---|---|---|---|
| 0 | 0 | 0 | 0 |
| 1 | 0 | 1 | 0 |
| 2 | 1 | 0 | 0 |
| 3 | 1 | 1 | 0 |
| 4 | 0 | 0 | 1 |
| 5 | 0 | 1 | 1 |
| 6 | 1 | 0 | 1 |
| 7 | 1 | 1 | 1 |
| 8 | 0 | 2 | 0 |
| 9 | 0 | 3 | 0 |
| 10 | 1 | 2 | 0 |
| 11 | 1 | 3 | 0 |
| 12 | 0 | 2 | 1 |
| 13 | 0 | 3 | 1 |
| 14 | 1 | 2 | 1 |
| 15 | 1 | 3 | 1 |

Here is Table 2:

**Table 2. Rel. 18 eType 2 DMRS ports for PDSCH**

| P | CDM group index | FD-OCC index | TD-OCC index |
|---|---|---|---|
| 0 | 0 | 0 | 0 |
| 1 | 0 | 1 | 0 |
| 2 | 1 | 0 | 0 |
| 3 | 1 | 1 | 0 |
| 4 | 2 | 0 | 0 |
| 5 | 2 | 1 | 0 |
| 6 | 0 | 0 | 1 |
| 7 | 0 | 1 | 1 |
| 8 | 1 | 0 | 1 |
| 9 | 1 | 1 | 1 |
| 10 | 2 | 0 | 1 |
| 11 | 2 | 1 | 1 |
| 12 | 0 | 2 | 0 |
| 13 | 0 | 3 | 0 |
| 14 | 1 | 2 | 0 |
| 15 | 1 | 3 | 0 |
| 16 | 2 | 2 | 0 |
| 17 | 2 | 3 | 0 |
| 18 | 0 | 2 | 1 |
| 19 | 0 | 3 | 1 |
| 20 | 1 | 2 | 1 |
| 21 | 1 | 3 | 1 |
| 22 | 2 | 2 | 1 |
| 23 | 2 | 3 | 1 |

In 3GPP, for the two codewords (CWs) case (when the number of layers is more than 4), mapping of the layers to two codewords is illustrated in following table.

| Rank | Layers for CW0 | Layers for CW1 |
|---|---|---|
| 5 | 0,1 | 2,3,4 |
| 6 | 0,1,2 | 3,4,5 |
| 7 | 0,1,2 | 3,4,5,6 |
| 8 | 0,1,2,3 | 4,5,6,7 |

Simultaneously, the layers are mapped to DMRS ports. The DMRS ports in the table are mapped to layers in order. For example, for rank=6 with type 2 DMRS is used, as shown in Table 7.3.1.2.2-2 in FIG. 2B, DMRS ports of 0,1,2,3,6,8 are used (see the row with a value of 3 in FIG. 2B), and the layers are sequentially mapped to DMRS ports, as per the following: (layer #, DMRS port #) = (0,0), (1,1), (2,2) for codeword 0, and (3,3), (4,6), (5,8) for codeword 1.

It is noted that individual data streams can be characterized to be layers. When all the layers are considered, one can determine the rank.

In 3GPP RAN WG1 meeting #112, the following working assumption has been made.

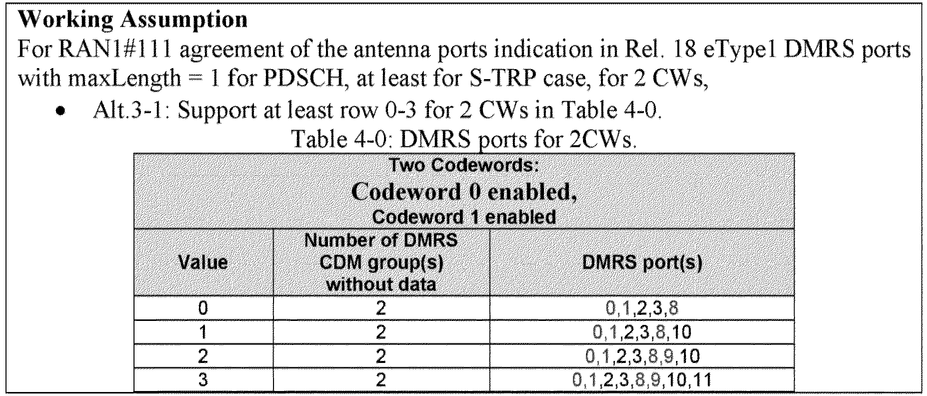

As an aside, this table uses the term "value". Value is the index in DCI, to indicate what configuration is used. In 3GPP, DCI includes "Antenna port field", and indicates the value of the Antenna port field. The antenna port field indicates the list of DMRS ports used.

According to the working assumption above, for each rank =5 ~ 8, DMRS ports combinations have DMRS ports that are transmitted via different CDM groups, which is explained as follows. To distinguish the ports mapping to CDM groups, here are the ports mapped to CDM group 0, with the number in parentheses being the value in the table: (0) DMRS ports of 0,1, and 8; (1) DMRS ports of 0,1, and 8; (2) DMRS ports of 0,1, 8, and 9; and (3) DMRS ports of 0,1, 8, and 9. Here are the ports mapped to CDM group 1, with the number in parentheses being the value in the table: (0) DMRS ports of 2 and 3; (1) DMRS ports of 2, 3, and 10; (2) DMRS ports of 2, 3, and 10; and (3) DMRS ports of 2, 3, 10, and 11.

When the number of ports multiplexed into a DMRS CDM group is the same for both CDM group 0 and 1, one can expect the inter layer interference level for a port from the other ports are similar for the ports in both CDM groups. The inter layer interference occurs when channel is not flat, e.g., OCC orthogonality is lost due to frequency selectivity. For even number rank (rank = 6 and 8), indicated DMRS ports associated with CDM groups 0 and 1 are evenly distributed. That is, each CDM groups 0 and 1 has three ports for the DMRS ports of 0,1,2,3,8,10 for rank 6 and four ports for the DMRS ports of 0,1,2,3,8,9,10,11 for rank 8. But, for odd number rank (rank = 5 and 7), the number of ports for two CDM groups are different. If the number of ports multiplexed into a CDM group is different (e.g., 3 ports for CDM group 0 and 2 ports for CDM group 1), the level of interference for a port is different for ports in CDM group 0 and CDM group 1. Port 0 in CDM group 0 is interfered by other two ports while Port 2 in CDM group 1 is interfered by only single port. So, one can expect that port 2 has lower interference level than port 0, and transmission using that port can be received with higher SINR at receiver. This is more serious for Rel-18 eType1/2 DMRS, because this uses FD-OCC4, where longer FD-OCC is weak for a long delay channel, and orthogonality between ports in the same CDM group is not well preserved.

The following table is showing the mapping of DMRS ports to different codewords (CW0 and CW1).

| **Value** | **Number of DMRS CDM group(s) without data** | **DMRS port(s) for CW0** | **DMRS port(s) for CW1** |
|---|---|---|---|
| 0 (rank 5) | 2 | 0,1 | 2,3,8 |
| 1 (rank 6) | 2 | 0,1,2 | 3,8,10 |
| 2 (rank 7) | 2 | 0,1,2 | 3,8,9,10 |
| 3 (rank 8) | 2 | 0,1,2,3 | 8,9,10,11 |

The ports that are mapped to CDM group 0 are listed as following with the number in parentheses being the value in the table: (0) DMRS ports of 0 and 1 for CW0 and 8 for CW1; (1) DMRS ports of 0 and 1 for CW0 and 8 for CW1; (2) DMRS ports of 0 and 1 for CW0 and 8 and 9 for CW1; and (3) DMRS ports of 0 and 1 for CW0 and 8 and 9 for CW1. The ports that are mapped to CDM group 1 are listed as following with the number in parentheses being the value in the table: (0) no DMRS for CW0 and 2 and 3 for CW1; (1) DMRS port of 2 for CW0 and 10 for CW1; (2) DMRS port of 2 for CW0 and 3 and 10 for CW1; and (3) DMRS ports of 2 and 3 for CW0 and 10 and 11 for CW1.

In order to mitigate the different SINR over different ports, for getting diversity gain from different CDM groups, it is beneficial to multiplex ports from different CDM groups into one CW. As we have already discussed, for rank= 6 and 8, the SINR level of different CDM groups are expected to be about the same level, so no issue regarding to the SINR imbalance is expected. For rank=5, for CW0, two DMRS ports from CDM group 0 are used, while for CW1, 2 ports from CDM group 1 and one port from CDM group 0 are used. Then, the performance of CW0 is expected to be relatively worse than CW 1. For rank=7, for CW0, two DMRS ports from CDM group 0 and one DMRS port from CDM group 1 are used, and for CW1, two DMRS ports from CDM group 0 and two DMRS ports from CDM group 1 are used. This is relatively better than rank=5 case, so DMRS ports from different CDM groups are mapped to each codeword with good balance.

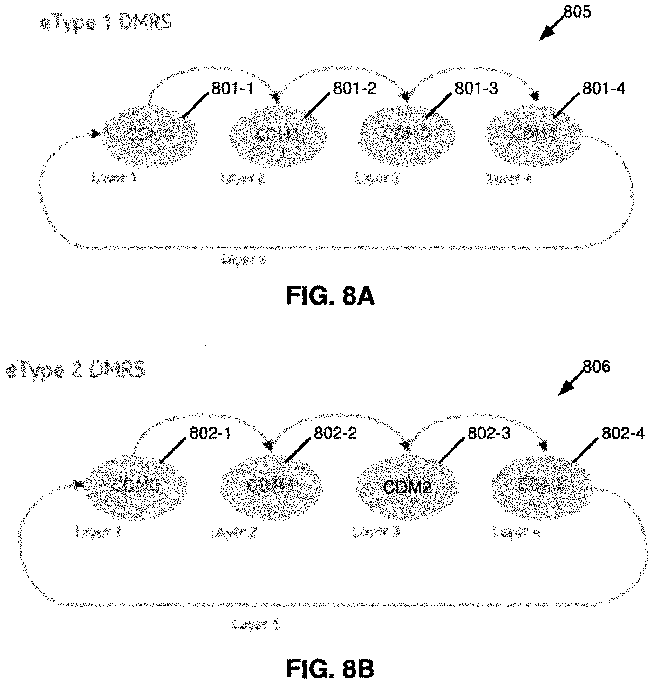

Now that an overview has been provided, the exemplary embodiments are described. An example target herein is to enhance DL DMRS channel estimation diversity for ranks 5 - 8 in the presence, e.g., of a frequency-selective radio propagation channel. The proposed examples of methods enable improving channel estimation diversity by distributing CW specific layers/DL DMRS ports to different CDM groups. One example used herein is that codeword-to-layer mapping should be determined with the principle of distributing DMRS ports (where each DMRS port corresponds to a PDSCH/PUSCH layer) multiplexed in different CDM groups that are mapped to codewords. FIGS. 8A and 8B contain structural mapping that may be, but are not required to be, used to implement this principle. This is explained in further detail below.

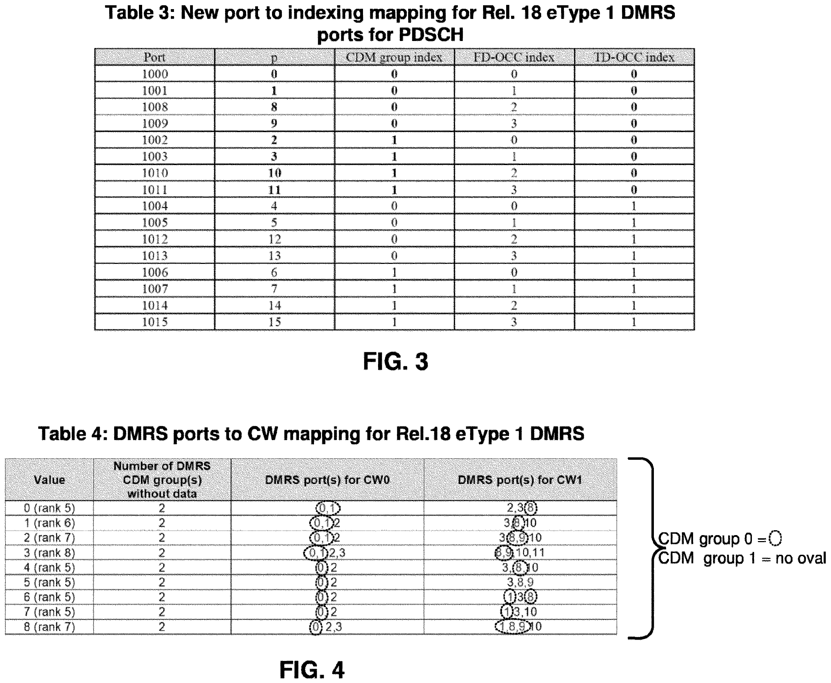

Turning to Tables 3 and 4, these tables show the DMRS ports organized by CDM groups and TD-OCC index. Table 3 is illustrated in FIG. 4, illustrating port to CW mapping for Rel. 18 eType 1 DMRS ports for PDSCH, in accordance with an exemplary embodiment. Table 4 is illustrated in FIG. 4, illustrating DMRS ports to CW mapping for Rel. 18 eType 1 DMRS, in accordance with an exemplary embodiment. In Table 4, the ports that are mapped to CDM group 0 are surrounded by an oval with a dashed line, and the ports that are mapped to CDM group 1 are not surrounded by anything.

Based at least on Table 3 in FIG. 3, the existing table for the working assumption is as follows. FIG. 3 illustrates new port to indexing mapping for Rel. 18 eType 1 DMRS ports for PDSCH. This table (relative to Table 1 above) is reorganized by the CDM group index and TD-OCC index. Currently, ports are allocated in order 1000, 1001, and this reorganization in FIG. 3 instead shows how CDM groups for example in could be reorganized in an acyclic manner. See also Table 4 in FIG. 4. This adds new potential combinations, and any options can replace the existing combination or can be added into new row. One can add combinations heuristically or in structural manner (see FIGS. 8A and 8B). Thus, it is proposed to add the possibility to distribute DMRS ports and CDM groups illustrated in Table 4 (shown in FIG. 4).

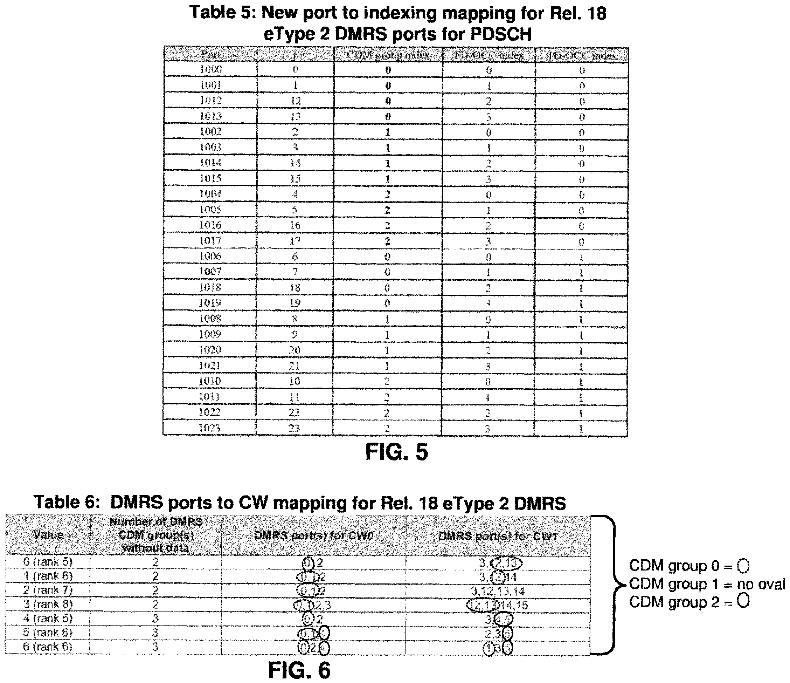

Similarly, for eType2 DMRS ports for PDSCH, this is illustrated in Table 5 of FIG. 5. FIG. 5 is a table (Table 5) illustrating new port to indexing mapping for Rel. 18 eType 2 DMRS ports for PDSCH. Similarly to FIG. 3, FIG. 5 reorganizes Table 2 above in an acyclic manner.

Based on this, the DMRS port combinations for eType2 DMRS is illustrated in FIG. 6. FIG. 6 is a table (Table 6) illustrating DMRS ports to CW mapping for Rel. 18 eType 2 DMRS. In Table 6, the ports that are mapped to CDM group 0 are surrounded by an oval with a dashed line, the ports that are mapped to CDM group 1 are not surrounded by anything, and the ports that are mapped to CDM group 2 are surrounded by an oval with a solid line.

Proposed methods enable one to distribute layers associated with different CWs to different CDM groups so that higher DMRS port diversity can be achieved. FIG. 7 is a flowchart of a method for increasing DMRS channel estimation reliability for higher ranks. FIG. 7 is a general example, and FIGS. 8A-8D are used to describe more specific examples with cyclic mapping. The instant techniques may be performed in uplink by a UE 110 or in downlink by a gNB 170. Examples below use DL and PDSCH, but these examples are also suitable for UL and PUSCH. The blocks in FIG. 7 are assumed to be performed by a transmitting apparatus, such as a UE 110 or gNB 170.

In block 710, the transmitting apparatus selects a mapping, for demodulation reference signals for one or more transmissions on a channel, using information for ranks higher than four that has distributed codeword-specific layers and ports assigned for the demodulation reference signals to different codewords. See, e.g., the Tables 3 and 4 and corresponding FIGS. 3 and 4 for eType 1 DMRS with ranks greater than four, or see Tables 5 and 6 and corresponding FIGS. 5 and 6 for eType 2 DMRS with ranks greater than 4. In block 720, the transmitting apparatus distributes layers over the CDM groups. Note also that this distribution may use layer-to-port mapping can be in an ascending order (e.g., DMRS ports for Table 4 for value 5/rank 5 are 0,2,3,8,9, which can be mapped to layers in ascending order) or using cyclic mapping, described below. The transmitting apparatus in block 740 transmits the demodulation reference signals on the channel.

It is noted that layer-to-port mapping may be implicitly known by DMRS port combinations indicated in DCI. Thus, whether the layer-to-port mapping is in ascending order or using cycling mapping, this is able to be determined by the receiving apparatus.

The distributing in block 720 may also be performed by block 730. In block 730, the transmitting apparatus performs layer-to-CDM group (e.g., a second) mapping, where layers are distributed across different CDM groups in an ascending or cyclic manner, to form an entire mapping.

The ascending manner may work as follows. DMRS ports are mapped via the first mapping to CDM groups, and the layer-to-CDM group mapping is performed by distributing layers to CDM groups in an ascending manner based on DMRS ports. That is, a lowest layer is assigned to a DMRS port having a lowest number, a higher layer is assigned to a DMRS port having a higher number, and continuing until a highest layer is assigned to a DMRS port having a highest number. Looking for instance at value 4/rank 5 of Table 4, the DMRS ports are 0,2,3,8,10. Assuming layers 1-5 are being used, the DMRS port to layer mapping is the following, with layer to DMRS port: (1,0); (2,2); (3,3); (4,8); and (5,10). DMRS ports 0 and 8 are assigned to CDM0 (CDM group 0), so layers 1 and 4 are assigned to this CDM group 0. DMRS ports 2, 3 and 10 are assigned to CDM1 (CDM group 1), so layers 2, 3 and 5 are assigned to this CDM group 1.

An example of certain proposed methods may define layer-to-CDM mapping, where layers are distributed across different CDM groups with cyclic mapping. FIGS. 8A and 8B show the illustration of possible proposed cyclic mappings, for eType 1 DMRS in FIG. 8A and for eType2 DMRS in FIG. 8B. This mapping can be easily extended for higher rank, e.g., larger than 8.

FIG. 8A has a cyclic mapping 805 with multiple nodes 801: node 801-1 corresponding to CDM0; node 801-2 corresponding to CDM1; node 801-3 corresponding to CDM0; and node 801-4 corresponding to CDM1. The nodes 801 are interconnected by edges, and the edge from node 801-4 to node 801-1 is used for layer 5. Node 801-1 is a starting node and node 801-4 is an ending node, and a cycle is completed by the edge from node 801-4 to node 801-1. FIG. 8C, described below, illustrates how the cyclic mapping 805 might be used in one example.

FIG. 8B has a cyclic mapping 806 with multiple nodes 802: node 802-1 corresponding to CDM0; node 802-2 corresponding to CDM1; node 802-3 corresponding to CDM2; and node 802-4 corresponding to CDM1. The nodes 802 are interconnected by edges, and the edge from node 802-4 to node 802-1 is used for layer 5. Node 802-1 is a starting node and node 802-4 is an ending node, and a cycle is completed by the edge from node 802-4 to node 802-1. FIG. 8D, described below, illustrates how the cyclic mapping 806 might be used in one example.

Referring to FIG. 8C, this figure is a flowchart illustrating one example of applying the cyclic mapping of FIG. 8A. Block 820 has a transmitting apparatus (e.g., gNB for PDSCH, but could also be a UE for PUSCH) 820 selecting a (e.g., first) mapping, for DMRSs for one or more downlink transmissions on a channel (e.g., PDSCH), using information for ranks greater than four that maps (e.g., downlink) ports assigned for the DMRSs to different codewords and to different CDM groups. In this example, the information is as per Tables 3 and 4 for Rel. 18 eType 1 DMRS ports for PDSCH. In block 830, the transmitting apparatus performs (e.g., second) layer-to-CDM group mapping, where layers are distributed across different CDM groups in a cyclic manner, to form an entire mapping. The cyclic manner may be defined by the cyclic mapping 805 of FIG. 8A. The cyclic mapping 805 may be applicable to at least value 6/rank 5 of Table 4 in FIG. 4. Block 840 has the transmitting apparatus perform transmission of DMRS over the channel (e.g., PDSCH) as per the entire mapping.

FIG. 8D is a flowchart illustrating one example of applying the cyclic mapping of FIG. 8B. Block 820-1 has a transmitting apparatus (e.g., gNB for PDSCH, but would also be a UE for PUSCH) selecting a (e.g., first) mapping, for DMRSs for one or more downlink transmissions on a channel (e.g., PDSCH), using information for ranks greater than four that maps (e.g., downlink) ports assigned for the DMRSs to different codewords and to different CDM groups. In this example, the information is as per Tables 5 and 6 for Rel. 18 eType 2 DMRS ports for PDSCH. In block 830, the transmitting apparatus performs (e.g., second) layer-to-CDM group mapping, where layers are distributed across different CDM groups in a cyclic manner, to form an entire mapping. The cyclic manner may be defined by the cyclic mapping 805 of FIG. 8A. The cyclic mapping 806 may be applicable to at least value 6/rank 6 of Table 6 in FIG. 6. Block 840 has the transmitting apparatus perform transmission of DMRS over the channel (e.g., PDSCH) as per entire mapping.

It is noted that for eType2, there are two options, where the number of CDM group without data is 2 or 3. If it is 2, CDM2 is typically not used, instead the REs are used for data transmission. Cyclic mapping could be happening between CDM0 and CDM1. When CDM group without data =3, all of CDM 0/1/2 are used, so cyclic mapping across all three CDM groups may be performed. The cyclic mapping can be one of the options, but to minimize the FD-OCC length, it could be that using port 0-5 would be beneficial.

The following are additional examples.

Example 1. A method, comprising:
selecting a mapping, for demodulation reference signals for one or more transmissions on a channel, using information for ranks higher than four that has ports assigned for the demodulation reference signals mapped to different codewords and to different code division multiplexing groups;
distributing layers over the code division multiplexing groups; and
transmitting the demodulation reference signals on the channel.

Example 2. The method according to example 1, wherein the distributing layers over the code division multiplexing groups further comprises:
performing layer-to-code division multiplexing group mapping, where layers are distributed across different code division multiplexing groups in an ascending or cyclic manner.

Example 3. The method according to example 2, wherein the selected mapping is for demodulation reference signal ports for the channel and having two possible code division multiplexing groups, and the information maps individual demodulation reference signal ports to corresponding codewords.

Example 4. The method according to example 3, wherein the information that maps individual demodulation reference signal ports to corresponding codewords maps individual demodulation reference signal ports to individual unique combinations of code division multiplexing group index, frequency division-orthogonal cover code index, and time division-orthogonal cover code index from a plurality of such combinations.

Example 5. The method according to any one of examples 3 to 4, wherein the information comprises mapping of demodulation reference signal ports to codewords, wherein for individual values, of a plurality of values, corresponding to individual ranks, a set of demodulation reference signal ports is split into two subsets, and each subset corresponds to one of two codewords, wherein demodulation reference signal ports in each of the sets are assigned to two different code division multiplexing groups, and wherein for each of the sets either the demodulation reference signal ports are split evenly between the two different code division multiplexing groups or one of the two different code division multiplexing groups is assigned one more demodulation reference signal port then the other of the two different code division multiplexing groups.

Example 6. The method according to example 3, wherein the configuration is for demodulation reference signal ports for the channel and having three possible code division multiplexing groups, and the information maps individual demodulation reference signal ports to corresponding codewords.

Example 7. The method according to example 6, wherein the information that maps individual demodulation reference signal ports to corresponding codewords maps individual demodulation reference signal ports to individual unique combinations of code division multiplexing group index, frequency division-orthogonal cover code index, and time division-orthogonal cover code index from a plurality of such combinations.

Example 8. The method according to any one of examples 3 to 4, wherein the information comprises mapping of demodulation reference signal ports to codewords, wherein for individual values, of a plurality of values, corresponding to individual ranks, a set of demodulation reference signal ports is split into two subsets, and each subset corresponds to one of two codewords, wherein demodulation reference signal ports in each of the sets are assigned to two different code division multiplexing groups, and wherein for each of the sets either the demodulation reference signal ports are split evenly between the two different code division multiplexing groups or one of the two different code division multiplexing groups is assigned one more demodulation reference signal port then the other of the two different code division multiplexing groups.

Example 9. The method according to any one of examples 2 to 8, wherein demodulation reference signal ports are mapped via the selected mapping to code division multiplexing groups, and the layer-to-code division multiplexing group mapping is performed by distributing layers to code division multiplexing groups in an ascending manner based on demodulation reference signal ports, so a lowest layer is assigned to a demodulation reference signal port having a lowest number, a higher layer is assigned to a demodulation reference signal port having a higher number, and continuing until a highest layer is assigned to a demodulation reference signal port having a highest number.

Example 10. The method according to any one of examples 2 to 8, wherein the layer-to-code division multiplexing group mapping is performed using cyclic mapping having individual nodes for an individual code division multiplexing group and a corresponding layer, and edges connecting one node with a neighbor node, wherein an ending node has an edge connecting to a starting node in the cyclic mapping.

Example 11. The method according to any one of examples 1 to 10, performed either by a user equipment where the channel is a physical uplink shared channel or by a base station where the channel is a physical downlink shared channel.

Example 12. A computer program, comprising instructions for performing the methods of any of examples 1 to 11, when the computer program is run on an apparatus.

Example 13. The computer program according to example 12, wherein the computer program is a computer program product comprising a computer-readable medium bearing instructions embodied therein for use with the apparatus.

Example 14. The computer program according to example 12, wherein the computer program is directly loadable into an internal memory of the apparatus.

Example 15. An apparatus, comprising means for performing:
selecting a mapping, for demodulation reference signals for one or more transmissions on a channel, using information for ranks higher than four that has ports assigned for the demodulation reference signals mapped to different codewords and to different code division multiplexing groups;
distributing layers over the code division multiplexing groups; and
transmitting the demodulation reference signals on the channel.

Example 16. The apparatus according to example 15, wherein the distributing layers over the code division multiplexing groups further comprises:
performing layer-to-code division multiplexing group mapping, where layers are distributed across different code division multiplexing groups in an ascending or cyclic manner.

Example 17. The apparatus according to example 16, wherein the selected mapping is for demodulation reference signal ports for the channel and having two possible code division multiplexing groups, and the information maps individual demodulation reference signal ports to corresponding codewords.

Example 18. The apparatus according to example 17, wherein the information that maps individual demodulation reference signal ports to corresponding codewords maps individual demodulation reference signal ports to individual unique combinations of code division multiplexing group index, frequency division-orthogonal cover code index, and time division-orthogonal cover code index from a plurality of such combinations.

Example 19. The apparatus according to any one of examples 17 to 18, wherein the information comprises mapping of demodulation reference signal ports to codewords, wherein for individual values, of a plurality of values, corresponding to individual ranks, a set of demodulation reference signal ports is split into two subsets, and each subset corresponds to one of two codewords, wherein demodulation reference signal ports in each of the sets are assigned to two different code division multiplexing groups, and wherein for each of the sets either the demodulation reference signal ports are split evenly between the two different code division multiplexing groups or one of the two different code division multiplexing groups is assigned one more demodulation reference signal port then the other of the two different code division multiplexing groups.

Example 20. The apparatus according to example 17, wherein the configuration is for demodulation reference signal ports for the channel and having three possible code division multiplexing groups, and the information maps individual demodulation reference signal ports to corresponding codewords.

Example 21. The apparatus according to example 20, wherein the information that maps individual demodulation reference signal ports to corresponding codewords maps individual demodulation reference signal ports to individual unique combinations of code division multiplexing group index, frequency division-orthogonal cover code index, and time division-orthogonal cover code index from a plurality of such combinations.

Example 22. The apparatus according to any one of examples 17 to 18, wherein the information comprises mapping of demodulation reference signal ports to codewords, wherein for individual values, of a plurality of values, corresponding to individual ranks, a set of demodulation reference signal ports is split into two subsets, and each subset corresponds to one of two codewords, wherein demodulation reference signal ports in each of the sets are assigned to two different code division multiplexing groups, and wherein for each of the sets either the demodulation reference signal ports are split evenly between the two different code division multiplexing groups or one of the two different code division multiplexing groups is assigned one more demodulation reference signal port then the other of the two different code division multiplexing groups.

Example 23. The apparatus according to any one of examples 16 to 22, wherein demodulation reference signal ports are mapped via the selected mapping to code division multiplexing groups, and the layer-to-code division multiplexing group mapping is performed by distributing layers to code division multiplexing groups in an ascending manner based on demodulation reference signal ports, so a lowest layer is assigned to a demodulation reference signal port having a lowest number, a higher layer is assigned to a demodulation reference signal port having a higher number, and continuing until a highest layer is assigned to a demodulation reference signal port having a highest number.

Example 24. The apparatus according to any one of examples 16 to 22, wherein the layer-to-code division multiplexing group mapping is performed using cyclic mapping having individual nodes for an individual code division multiplexing group and a corresponding layer, and edges connecting one node with a neighbor node, wherein an ending node has an edge connecting to a starting node in the cyclic mapping.

Example 25. The apparatus according to any one of examples 15 to 24, comprising either a user equipment where the channel is a physical uplink shared channel or a base station where the channel is a physical downlink shared channel.

Example 26. The apparatus of any preceding apparatus example, wherein the means comprises:
at least one processor; and
at least one memory storing instructions that, when executed by at least one processor, cause the performance of the apparatus.

Example 27. An apparatus, comprising:
one or more processors; and
one or more memories storing instructions that, when executed by the one or more processors, cause the apparatus at least to perform:
selecting a mapping, for demodulation reference signals for one or more transmissions on a channel, using information for ranks higher than four that has ports assigned for the demodulation reference signals mapped to different codewords and to different code division multiplexing groups;
distributing layers over the code division multiplexing groups; and
transmitting the demodulation reference signals on the channel.

Example 28. The apparatus of example 27, wherein the one or more memories further store instructions that, when executed by the one or more processors, cause the apparatus at least to perform the method of examples 2 to 11.

Without in any way limiting the scope, interpretation, or application of the claims appearing below, a technical effect and/or advantage of one or more of the example embodiments disclosed herein is relaxing the current way that the DMRS ports in the table(s) are mapped to layers in sequential order. Another technical effect and/or advantage of one or more of the example embodiments disclosed herein is improving DMRS channel estimation reliability for two codewords by distributing CDM groups to different layers. Another technical effect and/or advantage of one or more of the example embodiments disclosed herein is the inter-layer interference can be reduced by allowing either a heuristic or structural method for CDM group to layer mapping.

As used in this application, the term "circuitry" may refer to one or more or all of the following:
(a) hardware-only circuit implementations (such as implementations in only analog and/or digital circuitry) and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments herein may be implemented in software (executed by one or more processors), hardware (e.g., an application specific integrated circuit), or a combination of software and hardware. In an example embodiment, the software (e.g., application logic, an instruction set) is maintained on any one of various conventional computer-readable media. In the context of this document, a "computer-readable medium" may be any media or means that can contain, store, communicate, propagate or transport the instructions for use by or in connection with an instruction execution system, apparatus, or device, such as a computer, with one example of a computer described and depicted, e.g., in FIG. 1B. A computer-readable medium may comprise a computer-readable storage medium (e.g., memories 125 or other device) that may be any media or means that can contain, store, and/or transport the instructions for use by or in connection with an instruction execution system, apparatus, or device, such as a computer. A computer-readable storage medium does not comprise propagating signals, and therefore may be considered to be non-transitory. The term "non-transitory", as used herein, is a limitation of the medium itself (i.e., tangible, not a signal) as opposed to a limitation on data storage persistency (e.g., RAM, random access memory, versus ROM, read-only memory).

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are several variations and modifications which may be made without departing from the scope of the present invention as defined in the appended claims.

The following abbreviations that may be found in the specification and/or the drawing figures are defined as follows:
- 5G: fifth generation
- AMF: access and mobility management function
- BBU: base band unit
- CDM: code division multiplexing
- CP: cyclic prefix
- CU: central unit
- CW: codeword
- DCI: Downlink Control Information
- DL: downlink (from network to UE)
- DMRS or DM-RS: demodulation reference signal
- DU: distributed unit
- eNB (or eNodeB): evolved Node B (e.g., an LTE base station)
- FD: frequency division
- gNB (or gNodeB): base station for 5G/NR
- I/F: interface
- LTE: long term evolution
- MIMO: multiple input, multiple output
- MME: mobility management entity
- ng or NG: next generation
- ng-eNB or NG-eNB: next generation eNB
- NR: new radio
- N/W or NW: network
- OCC: orthogonal cover code
- OFDM: Orthogonal Frequency Division Multiplexing
- PDSCH: physical downlink shared channel
- PUSCH: physical uplink shared channel
- RAN: radio access network
- RE: resource element
- Rel: release
- RLC: radio link control
- RRH: remote radio head
- RRC: radio resource control
- RU: radio unit
- Rx: receiver
- SGW: serving gateway
- SINR: signal to interference plus noise ratio
- SMF: session management function
- TD: time division
- Tx: transmitter
- UE: user equipment (e.g., a wireless, typically mobile device)
- UI: user interface
- UL: uplink (from UE to network)
- UPF: user plane function
- WG: working group

## Claims

1. An apparatus, comprising means for performing:
selecting a mapping, for demodulation reference signals for one or more transmissions on a channel, using information for ranks higher than four that has ports assigned for the demodulation reference signals mapped to different codewords and to different code division multiplexing groups;
distributing layers over the code division multiplexing groups; and
transmitting the demodulation reference signals on the channel.

2. The apparatus according to claim 1, wherein the distributing layers over the code division multiplexing groups comprises:
performing layer-to-code division multiplexing group mapping, where layers are distributed across different code division multiplexing groups in an ascending or cyclic manner.

3. The apparatus according to claim 2, wherein the selected mapping is for demodulation reference signal ports for the channel and having two possible code division multiplexing groups, and the information maps individual demodulation reference signal ports to corresponding codewords.

4. The apparatus according to claim 3, wherein the information that maps individual demodulation reference signal ports to corresponding codewords maps individual demodulation reference signal ports to individual unique combinations of code division multiplexing group index, frequency division-orthogonal cover code index, and time division-orthogonal cover code index from a plurality of such combinations.

5. The apparatus according to claim 3 or 4, wherein the information comprises mapping of demodulation reference signal ports to codewords, wherein for individual values, of a plurality of values, corresponding to individual ranks, a set of demodulation reference signal ports is split into two subsets, and each subset corresponds to one of two codewords, wherein demodulation reference signal ports in each of the sets are assigned to two different code division multiplexing groups, and wherein for each of the sets either the demodulation reference signal ports are split evenly between the two different code division multiplexing groups or one of the two different code division multiplexing groups is assigned one more demodulation reference signal port then the other of the two different code division multiplexing groups.

6. The apparatus according to claim 3, wherein the configuration is for demodulation reference signal ports for the channel and having three possible code division multiplexing groups, and the information maps individual demodulation reference signal ports to corresponding codewords.

7. The apparatus according to claim 6, wherein the information that maps individual demodulation reference signal ports to corresponding codewords maps individual demodulation reference signal ports to individual unique combinations of code division multiplexing group index, frequency division-orthogonal cover code index, and time division-orthogonal cover code index from a plurality of such combinations.

8. The apparatus according to claim 3 or 4, wherein the information comprises mapping of demodulation reference signal ports to codewords, wherein for individual values, of a plurality of values, corresponding to individual ranks, a set of demodulation reference signal ports is split into two subsets, and each subset corresponds to one of two codewords, wherein demodulation reference signal ports in each of the sets are assigned to two different code division multiplexing groups, and wherein for each of the sets either the demodulation reference signal ports are split evenly between the two different code division multiplexing groups or one of the two different code division multiplexing groups is assigned one more demodulation reference signal port then the other of the two different code division multiplexing groups.

9. The apparatus according to any of claims 2-8, wherein demodulation reference signal ports are mapped via the selected mapping to code division multiplexing groups, and the layer-to-code division multiplexing group mapping is performed by distributing layers to code division multiplexing groups in an ascending manner based on demodulation reference signal ports, so a lowest layer is assigned to a demodulation reference signal port having a lowest number, a higher layer is assigned to a demodulation reference signal port having a higher number, and continuing until a highest layer is assigned to a demodulation reference signal port having a highest number.

10. The apparatus according to any of claims 2-8, wherein the layer-to-code division multiplexing group mapping is performed using cyclic mapping having individual nodes for an individual code division multiplexing group and a corresponding layer, and edges connecting one node with a neighbor node, wherein an ending node has an edge connecting to a starting node in the cyclic mapping.

11. The apparatus according to any of claims 1-10, comprising either a user equipment where the channel is a physical uplink shared channel or a base station where the channel is a physical downlink shared channel.

12. A method, comprising:
selecting a mapping, for demodulation reference signals for one or more transmissions on a channel, using information for ranks higher than four that has ports assigned for the demodulation reference signals mapped to different codewords and to different code division multiplexing groups;
distributing layers over the code division multiplexing groups; and
transmitting the demodulation reference signals on the channel.

13. The method according to claim 12, wherein the distributing layers over the code division multiplexing groups further comprises:
performing layer-to-code division multiplexing group mapping, where layers are distributed across different code division multiplexing groups in an ascending or cyclic manner.

14. The method according to claim 13, wherein the selected mapping is for demodulation reference signal ports for the channel and having two possible code division multiplexing groups, and the information maps individual demodulation reference signal ports to corresponding codewords.

15. The method according to claim 14, wherein the information that maps individual demodulation reference signal ports to corresponding codewords maps individual demodulation reference signal ports to individual unique combinations of code division multiplexing group index, frequency division-orthogonal cover code index, and time division-orthogonal cover code index from a plurality of such combinations.
